# FASCICULE DE BREVET EUROPEEN

(11) **EP 3 097 276 B1**
(45) Date de publication et mention de la délivrance du brevet: **13.12.2017**
(21) Numéro de dépôt: 15704347.2
(22) Date de dépôt: 20.01.2015
(51) Int. Cl.: F01D 17/10, F02C 9/18

(54) **TURBOMACHINE À PRÉLÈVEMENT DE FLUX D'AIR COMPRIMÉ**
TURBOMASCHINE MIT ABZWEIGUNG VON VERDICHTERLUFT
TURBOMACHINE WITH COMPRESSED AIR BLEEDING

(30) Priorité: 21.01.2014 FR 1450491
(43) Date de publication de la demande: 30.11.2016
(73) Titulaire: SNECMA, 75015 Paris (FR)
(72) Inventeur: BENYAHIA, Abdelkader, 77550 Moissy-Cramayel Cedex (FR); BOITEUX, Jean-Michel, 77550 Moissy-Cramayel Cedex (FR); DELABRIÈRE, Maxime, 77550 Moissy-Cramayel Cedex (FR); FIACK, Matthieu, 77550 Moissy-Cramayel Cedex (FR); FONTANEL, Eddy, Stéphane, Joël, 77550 Moissy-Cramayel Cedex (FR); MARTIN MATOS, Alberto, 77550 Moissy-Cramayel Cedex (FR); ORSI, Hélène, 77550 Moissy-Cramayel Cedex (FR); REMBRY, Philippe, 77550 Moissy-Cramayel Cedex (FR); RENON, Olivier, 77550 Moissy-Cramayel Cédex (FR); ROSSI, Giuliana Elisa, 77550 Moissy-Cramayel Cedex (FR)
(74) Mandataire: Regimbeau
(86) Numéro de dépôt international: PCT/FR2015/050131
(87) Numéro de publication internationale: WO 2015/110748

(56) Documents cités:
- EP-A2- 2 383 453
- WO-A1-03/037715
- US-A1- 2013 336 759
- US-B1- 8 430 202

## Description

### Domaine de l'invention

L'invention concerne une turbomachine, comprenant un prélèvement d'un flux d'air comprimé issu du compresseur.

### Présentation de l'Art Antérieur

Une turbomachine comprend classiquement un compresseur haute pression et un compresseur basse pression.

Selon le régime du fonctionnement de la turbomachine (par exemple ralenti, ou pleins gaz), les compresseurs présentent un fonctionnement différent.

Lorsque la turbomachine passe d'un régime ralenti à un régime pleins gaz, un flux d'air comprimé à haut débit doit être évacué du compresseur, afin d'éviter des risques de pompage. Ceci est également le cas lors des phases transitoires de vol, ou lors des phases de ralenti, ou plus généralement lorsque le pilote est amené à manipuler la commande des gaz.

Ce flux d'air comprimé à évacuer présente à titre indicatif sur certaines turbomachines, une pression d'environ 40 bars et une température d'environ 900K.

En général, le flux d'air est prélevé en 100 en aval du compresseur haute pression mais un tel prélèvement à température, vitesse et taux de détente élevés génère des niveaux de bruit intenses et induit des contraintes thermiques.

Or, une contrainte acoustique de la turbomachine impose que le bruit supplémentaire de l'avion causé par le prélèvement du flux d'air (bruit propre de ce nouveau flux) et par sa réintroduction ultérieure soit inférieur à 1 EPNdB (« *Effective Perceived Noise in Decibels* », soit le bruit effectif perçu en décibels).

Les solutions de l'art antérieur proposées pour évacuer le flux d'air prélevé ne sont pas satisfaisantes à cet égard.

Selon une solution de l'art antérieur, le flux d'air prélevé est réintroduit au niveau de la tuyère d'éjection de la turbomachine. Toutefois, cette solution dégrade l'acoustique de la turbomachine, En outre, elle est lourde à mettre en place, car elle nécessite l'installation d'importantes ouvertures additionnelles au niveau de la tuyère d'éjection.

Une autre solution connue consiste à réintroduire le flux d'air dans une veine secondaire de la turbomachine. Toutefois, ceci implique d'introduire un flux d'air chaud dans le flux froid de la veine secondaire, ce mélange causant un fort impact acoustique.

Par les documents US 2013/0336759 A1 et US 8 430 202 B1, on connaît les systèmes d'introduction d'air.

### Présentation de l'invention

Afin de pallier les inconvénients de l'état de la technique, l'invention propose une turbomachine selon la revendication 1 comprenant un carter d'échappement, comprenant une pluralité de bras, l'espace séparant les bras définissant des ouvertures dans lesquelles circule un flux d'air primaire de la turbomachine, au moins un conduit, configuré pour prélever à une de ses extrémités un flux d'air comprimé, l'autre extrémité du conduit étant reliée à au moins une ouverture du carter d'échappement, de sorte à insérer le flux d'air prélevé dans ledit flux d'air primaire, ledit flux d'air prélevé présentant, lors de son insertion dans l'ouverture, un nombre de Mach inférieur ou égal à 0.5.

L'invention est avantageusement complétée par les caractéristiques suivantes, prises seules ou en une quelconque de leur combinaison techniquement possible :
- le conduit se termine à son autre extrémité par une pluralité de conduits secondaires, les conduits secondaires étant reliés aux ouvertures du carter d'échappement, pour y insérer le flux d'air prélevé ;
- la turbomachine comprend un ou plusieurs diaphragmes disposés dans les conduits secondaires et permettant de réduire la pression du flux d'air prélevé les traversant. Les diaphragmes permettent de conserver dans les conduits en leur amont un flux à pression élevée, ce qui permet donc de maintenir un diamètre réduit des conduits sur toute la longueur correspondante. Après la traversée du diaphragme, le flux voit sa pression réduite, ce qui participe à la réduction de la vitesse du flux et au respect des contraintes aérodynamiques et acoustiques ;

- les diaphragmes présentent une pluralité de trous ;
- la turbomachine comprend une ou plusieurs bouches en saillie extérieure du carter d'échappement, l'extrémité des conduits secondaires étant connectée aux bouches pour y insérer le flux d'air prélevé à destination des ouvertures ;
- la turbomachine présente un congé de raccordement entre les bouches et la partie extérieure du carter d'échappement ;
- les extrémités des conduits secondaires, insérant le flux d'air prélevé, sont disposées du côté intrados des bras ;
- les conduits secondaires présentent une inclinaison progressive en leur extrémité dont la pente est d'un angle θ constamment inférieur ou égal à 45° sur toute l'inclinaison par rapport à un axe longitudinal de la turbomachine ;
- l'angle entre le flux d'air prélevé introduit dans les ouvertures et le flux primaire circulant dans la turbomachine est inférieur à 45°, préférentiellement inférieur à 35° ;
- les extrémités des conduits secondaires reliées aux ouvertures du carter d'échappement sont disposées à un angle azimutal compris entre 3H et 9H.

Un avantage de l'invention est de permettre de réduire l'impact acoustique causé par le prélèvement du flux et par sa réintroduction.

Un autre avantage de l'invention est de permettre de maximiser la longueur des conduits du système de décharge, pour laquelle ceux-ci présentent un diamètre réduit. L'encombrement général de ces conduits est donc réduit.

En particulier, l'invention permet d'optimiser un compromis entre:
- la longueur des conduits pour laquelle ceux-ci présentent un diamètre réduit ;
- l'obtention d'un flux d'air présentant un nombre de Mach désiré en sortie des conduits.

Un autre avantage de l'invention est de proposer une solution simple et efficace, dans laquelle une unique pièce permet d'influer à la fois sur la pression dans les conduits, et donc sur la longueur des conduits pour laquelle un diamètre réduit est obtenu, ainsi que sur l'impact acoustique induit par le prélèvement du flux d'air comprimé.

Enfin, un autre avantage de l'invention est de proposer un système à encombrement réduit, et permettant en outre de préserver le flux secondaire.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1 est une représentation d'une turbomachine de l'art antérieur ;
- la Figure 2 est une représentation d'une partie de turbomachine selon un mode de réalisation de l'invention ;
- les Figures 3 et 4 représentent un carter d'échappement comprenant une pluralité de bras (bras « TRF », en vue de côté et vue arrière) ;

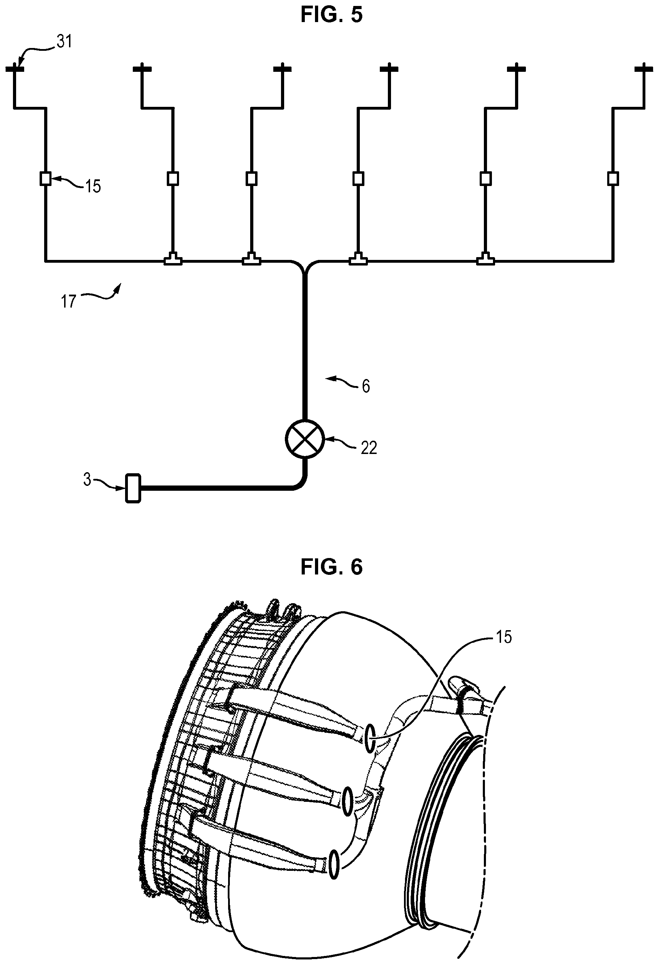

- la Figure 5 est un schéma représentant un conduit se terminant par des conduits secondaires comprenant des diaphragmes, selon une réalisation possible de l'invention;
- la Figure 6 illustre un positionnement possible des diaphragmes ;
- la Figure 7 représente l'effet de la perte de charge à la sortie du diaphragme sur l'écoulement du flux d'air ;
- la Figure 8 représente un diaphragme présentant une pluralité de trous ;
- la Figure 9 représente une condition d'angle permettant d'améliorer les performances acoustiques ;
- la Figure 10 représente une vue en coupe de la bouche en saillie sur la virole externe du carter d'échappement et connectée à l'extrémité de conduits ;
- la Figure 11 représente une vue tridimensionnelle de la bouche en saillie sur la virole externe du carter d'échappement.

### Description détaillée

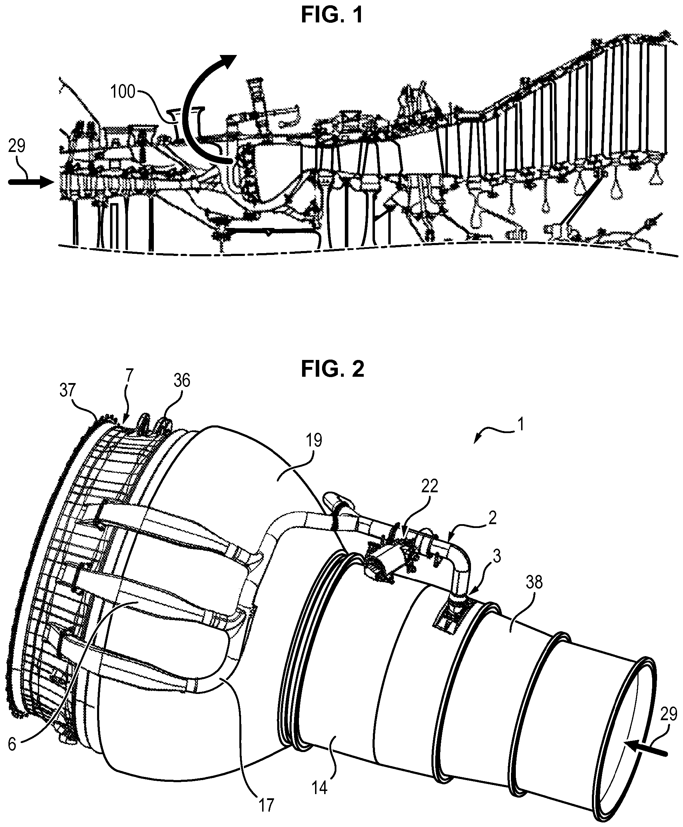

Comme illustré en Figure 2, la turbomachine à double flux 1 comprend de manière classique une turbine basse pression 14, une turbine haute pression 19, et un compresseur 38 haute pression. Le sens d'écoulement du flux prélevé est représenté par une flèche sur la Figure 1.

La turbomachine 1 comprend en outre un carter 7 d'échappement, disposé en sortie de la turbine basse pression 14. Ce carter 7 d'échappement est désigné par l'expression anglo-saxonne « *Turbine Rear Frame* » par l'homme du métier, et est de révolution. Ce carter 7 d'échappement est classiquement disposé avant la tuyère d'éjection. Il sert notamment à maintenir la structure de la turbomachine.

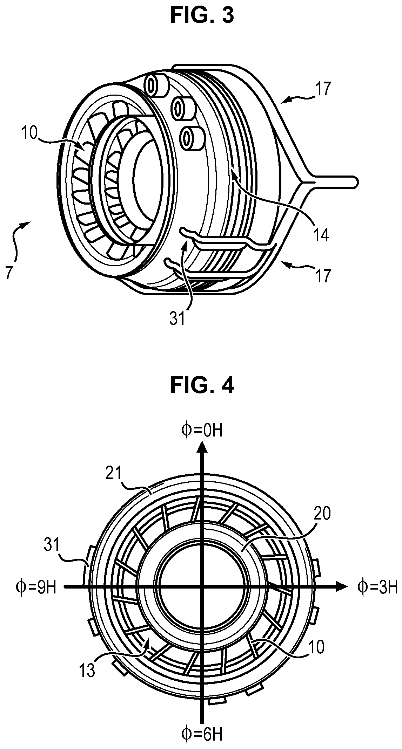

Comme illustré en Figures 3 et 4, le carter 7 d'échappement est sensiblement de révolution. Il comprend une pluralité de bras 10, l'espace séparant les bras définissant des ouvertures 13.

Les bras 10 s'étendent notamment entre un moyeu 20 interne de la pièce et une virole 21 externe de la pièce. La virole 21 est par exemple polygonale. Le moyeu 20 est fabriqué monobloc et est coulé.

Les bras 10 s'étendent dans une direction radiale, ou dans une direction tangentielle par rapport au moyeu, ou dans une direction intermédiaire entre ces deux directions. Leur sommet est coulé.

On entend par radial l'axe radial de la turbomachine 1, qui s'étend radialement par rapport à l'axe longitudinal de la turbomachine 1 (qui est l'axe d'écoulement du flux 29 primaire de la turbomachine 1). On rappelle que le flux primaire est le flux qui a suivi le processus thermodynamique dans la turbomachine (notamment à travers la chambre de combustion).

Le carter 7 comprend en général une pluralité de secteurs liés entre eux par soudage.

Des chapes 36 de suspension sont en général prévues en saillie extérieure du carter 7 d'échappement, et présentent une ou plusieurs oreilles. Le cas échéant, le carter 7 d'échappement comprend au moins une bride 37 externe, par exemple forgée et rapportée.

La turbomachine 1 comprend en outre au moins un conduit 2, configuré pour prélever à une de ses extrémités 3 un flux d'air comprimé. Le prélèvement peut par exemple être effectué en aval du compresseur 38 haute pression. L'autre extrémité du conduit 2 est reliée à une ouverture 13 du carter 7 d'échappement, pour y insérer le flux d'air prélevé. En d'autres termes, le conduit 2 réalise une liaison fluidique entre le flux d'air comprimé prélevé et l'ouverture 13.

Le flux d'air présente, lors de son insertion dans l'ouverture 13, un nombre de Mach inférieur ou égal à 0.5, ce qui permet de limiter l'impact acoustique.

Le conduit 2 comprend également une vanne 22 permettant de contrôler le débit du flux d'air prélevé par le conduit 2. L'ouverture et la fermeture de cette vanne 22 sont classiquement contrôlées par le calculateur de l'aéronef, en fonction des ordres du pilote. Cette vanne 22 est classiquement dénommée TBV par l'homme du métier, pour « *Transient Bleed Valve ».*

Dans le mode de réalisation illustré sur les figures, le conduit 2 se termine à son autre extrémité par une pluralité de conduits 6 secondaires, les conduits 6 secondaires étant reliés à des ouvertures 13 du carter 7 d'échappement, pour leur transmettre le flux d'air prélevé.

Selon une réalisation possible, l'autre extrémité du conduit 2 se termine par au moins deux branches 17 distinctes portant chacune une partie des conduits 6 secondaires. Sur l'exemple, chaque branche 17 porte trois conduits 6 secondaires.

Selon l'invention, l'extrémité 31 des conduits 6 secondaires traversent la virole 21 externe du carter 7 d'échappement pour déverser dans les ouvertures 13 le flux d'air prélevé. A cet effet, des trous peuvent être prévus dans la virole 21 externe pour permettre le passage de l'extrémité 31 des conduits 6.

Le carter 7 d'échappement comprend typiquement six trous réparties de manière symétrique : trois trous d'un côté, et trois trous de l'autre, de manière à limiter la distorsion thermomécanique.

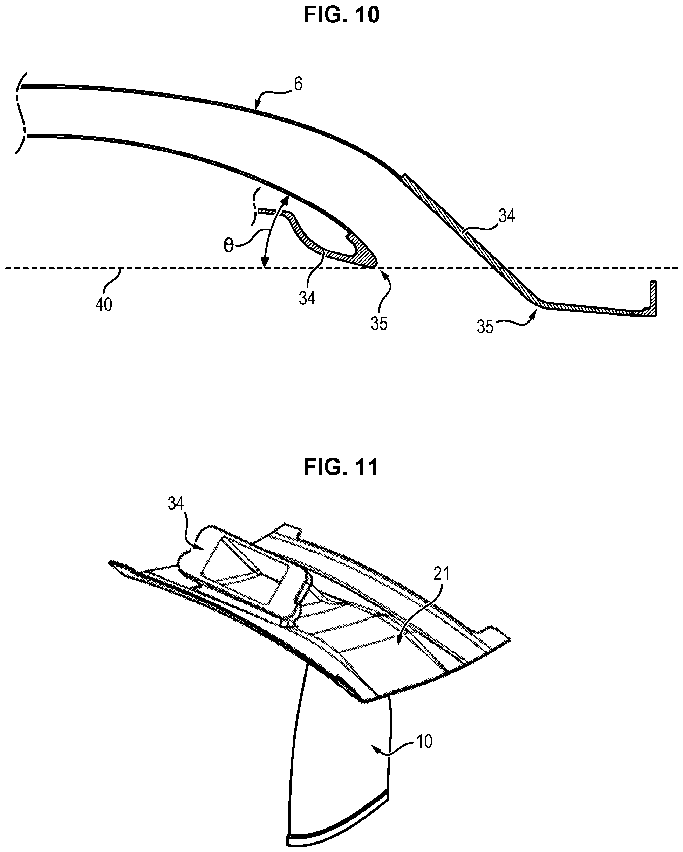

Selon un autre mode de réalisation, illustré en Figures 10 et 11, la turbomachine comprend une ou plusieurs bouches 34 en saillie extérieure de la virole 21, l'extrémité des conduits 6 secondaires étant connectée, par exemple par assemblage, aux bouches 34 pour y insérer le flux d'air prélevé à destination des ouvertures 13.

Les bouches 34 peuvent notamment être disposées sur la virole 21 entre les bras 10, et, préférentiellement, entre des zones de soudure.

Selon une réalisation possible, des congés 35 de raccordement sont présents entre les parties latérales des bouches 34 et la partie extérieure (virole 21) du carter 7 d'échappement

En outre, comme explicité ci-dessous, il a été découvert que le fait de disposer les extrémités des conduits 6 (i.e. des extrémités qui déversent le flux d'air prélevé dans le carter 7) du côté intrados des bras 10 améliore les performances aérodynamiques.

Dans le mode de réalisation mettant en oeuvre des bouches 34, celles-ci sont donc avantageusement disposées du côté intrados des bras 10.

Il est en de même pour le mode de réalisation cité ci-dessus mettant en oeuvre des trous dans la virole 21 externe pour permettre le passage de l'extrémité 31 des conduits 6, qui sont avantageusement disposés du côté intrados des bras 10.

Le positionnement azimutal des extrémités des conduits 6 a été défini afin d'optimiser les pertes des bras 10 du carter 7 en configuration conduits non débitants.

De par le phénomène de portance, le niveau de Mach au niveau de l'intrados des bras du carter 7 est plus faible par rapport au niveau de Mach à l'extrados.

La présence d'une bouche de conduit dans la veine en configuration non débitante est assimilable à la présence d'une discontinuité, ou d'une paroi qui vient localement arrêter l'écoulement de la veine au niveau du carter 7.

L'arrêt local de l'écoulement provoque une dissipation de l'énergie de l'écoulement qui se traduit par une augmentation des pertes et une réduction de la performance aérodynamique.

La dissipation d'énergie engendrée diminue avec le niveau de Mach local de l'écoulement, ce qui explique les propriétés favorables d'un positionnement azimutal des extrémités des conduits 6 proche de l'intrados.

Afin d'améliorer l'acoustique, et comme illustré en Figure 10, les conduits 6 secondaires présentent une inclinaison progressive en leur extrémité dont la pente est d'un angle θ constamment inférieur ou égal à 45°, par rapport à un axe 40 longitudinal de la turbomachine.

Ceci permet de lisser l'évolution de la pente de l'extrémité des conduits 6 secondaires vers le carter 7, et par conséquent de ne pas avoir une cassure trop abrupte dans la pente des conduits. Une telle cassure aurait pour effet de provoquer des décollements massifs de couche limite, et par conséquent, une augmentation du bruit.

Selon un mode de réalisation, les extrémités 31 des conduits 6 secondaires sont disposées sur la partie basse du carter 7 d'échappement, comme illustré en Figure 4, afin de respecter des contraintes d'installation et d'impact mécanique sur le carter 7 d'échappement. En effet, la partie haute du carter 7 d'échappement est déjà chargée mécaniquement.

On entend par « partie basse » le fait que les extrémités 31 des conduits 6 sont disposées à un angle azimutal Φ (angle dans le plan orthogonal à l'axe longitudinal de la turbomachine) compris entre 3H (H pour Heures) et 9H.

Le flux d'air prélevé présente typiquement une pression d'environ 40 bars. A la sortie de la vanne 22 du conduit 2, le flux d'air présente typiquement une pression d'environ 10 bars. Au niveau des ouvertures 13 dans lesquelles le flux d'air prélevé doit être déversé, la pression est d'environ 1 bar.

Par conséquent, une adaptation de la pression du flux d'air doit être réalisée.

La turbomachine 1 comprend des diaphragmes 15 disposés dans les conduits 6 secondaires et permettant de réduire la pression du flux d'air les traversant.

La position des diaphragmes 15 influe sur le Mach en sortie des conduits 6 secondaires.

Les diaphragmes 15 comprennent une plaque 25 présentant au moins un trou 18.

Après la traversée du diaphragme 15, la pression du flux d'air prélevé est par exemple, mais non limitativement, d'environ 1 bar.

Au passage du diaphragme 15, la perte de charge du flux d'air prélevé entraîne l'apparition d'ondes de choc et d'une zone 30 où laquelle l'écoulement est supersonique.

Outre la contrainte sur le nombre de Mach inférieur à 0.5 en sortie des conduits 6 secondaires, il est avantageux de disposer de conduits conservant un diamètre réduit.

A cet effet, il est souhaitable que le flux d'air prélevé conserve une pression élevée dans les conduits 2, 6 sur la distance la plus élevée possible, car cette pression élevée permet de maintenir un diamètre réduit des conduits 2, 6.

Il est donc souhaitable de pouvoir disposer les diaphragmes 15 le plus en aval possible des conduits 6, afin de maximiser la longueur sur laquelle le conduit 2 et les conduits 6 secondaires présentent un diamètre réduit, par exemple de valeur inférieure à 3 pouces, tout en conservant un nombre de Mach inférieur à 0.5 en sortie des conduits 6.

Ces deux contraintes sont contradictoires, la première imposant de disposer les diaphragmes 15 le plus en aval possible des conduits 6, la seconde imposant de disposer les diaphragmes 15 le plus en amont possible des conduits 6.

Afin d'optimiser ce compromis, les diaphragmes 15 présentent dans un mode de réalisation une pluralité de trous 18.

L'utilisation de diaphragmes 15 multi-perforés en lieu et place de diaphragmes 15 conventionnels mono-trou permet un meilleur mélange de l'écoulement en sortie du diaphragme et une dissipation plus rapide des chocs.

Ainsi l'étendue de la zone 30 en aval du diaphragme 15 où l'écoulement est supersonique est réduite par rapport à l'emploi d'un diaphragme 15 conventionnel.

Une unique pièce donc permet à la fois de répondre aux contraintes mécaniques (diamètre des conduits) et acoustiques (nombre de Mach en sortie).

A titre d'exemple non limitatif, les conduits présentent un diamètre de 2 pouces en amont des diaphragmes et de 2.25 pouces en aval des diaphragmes.

Selon un exemple de réalisation, les diaphragmes 15 sont disposés dans les conduits 6 secondaires à une position permettant :
- d'obtenir un flux d'air présentant un nombre de Mach inférieur à 0.5 en sortie des conduits 6 secondaires, et
- de maximiser la longueur sur laquelle le conduit 2 et les conduits 6 secondaires présentent un diamètre de valeur inférieure à 3 pouces.

La position du diaphragme peut être trouvée par simulations, ou via des expérimentations, ou par une combinaison des deux méthodes.

D'autres contraintes peuvent être imposées au flux prélevé afin d'améliorer les performances acoustiques.

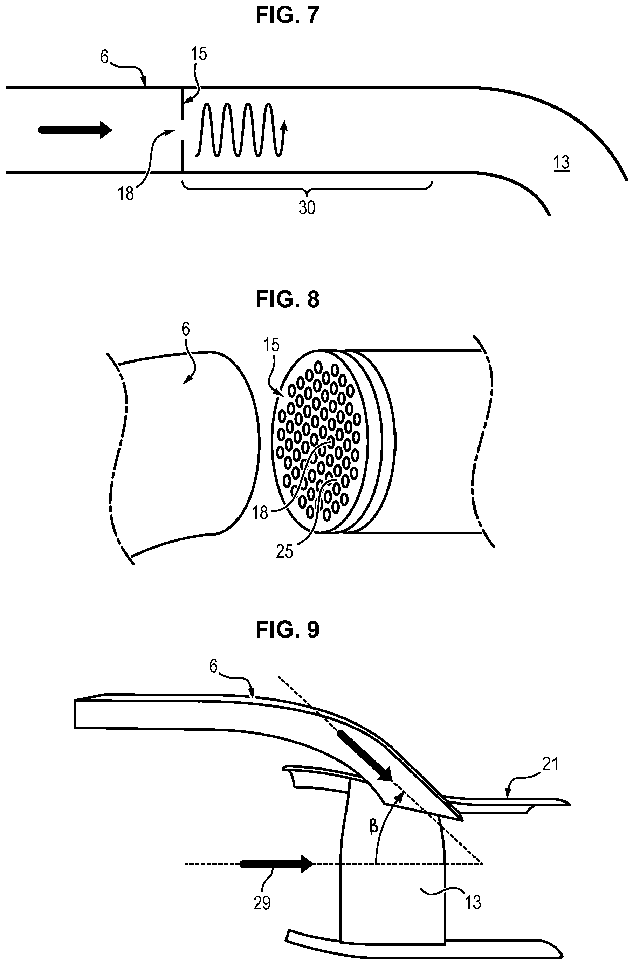

Selon un mode de réalisation, illustré en Figure 9, les conduits 6 présentent, à leurs extrémités 31 reliées aux ouvertures 13, un angle avec l'axe longitudinal de la turbomachine inférieur à 45°. Ceci permet d'imposer que le flux d'air prélevé introduit dans les ouvertures 13 présente un angle β inférieur à 45° avec le flux 29 primaire circulant dans les ouvertures 13 de la turbomachine. Préférentiellement, l'angle β est inférieur à 35°.

Dans le cas où des bouches 34 sont utilisées, ceci implique que les bouches 34 sont inclinées par rapport à la virole 21 avec un angle inférieur ou égal à 45°, ou à 35° selon le cas.

Selon l'invention, chaque conduit 6 secondaire est relié à une ouverture 13 différente du carter 7 d'échappement, pour lui transmettre le flux d'air prélevé. Etant donné que les ouvertures 13 ne communiquent pas entre elles, ceci permet d'améliorer d'avantage l'acoustique de l'écoulement en sortie des conduits 6, étant donné que les flux d'air en sortie des conduits 6 ne se mélangent pas.

## Revendications

1. Turbomachine (1) comprenant :
- un carter (7) d'échappement, comprenant une pluralité de bras (10), l'espace séparant les bras définissant des ouvertures (13) dans lesquelles circule un flux (29) d'air primaire de la turbomachine (1), ledit carter (7) d'échappement comprenant en outre un moyeu (20) interne et une virole (21) externe entre lesquels les bras (10) s'étendent ;
- au moins un conduit (2),
∘ configuré pour prélever à une de ses extrémités (3) un flux d'air comprimé,
∘ l'autre extrémité du conduit (2) étant reliée à au moins une ouverture (13) du carter (7) d'échappement, de sorte à insérer le flux d'air prélevé dans ledit flux (29) d'air primaire, ledit flux d'air prélevé présentant, lors de son insertion dans l'ouverture (13), un nombre de Mach inférieur ou égal à 0.5,
∘ le conduit (2) se terminant à ladite autre extrémité par une pluralité de conduits (6) secondaires, les conduits (6) secondaires étant reliés aux ouvertures (13) du carter (7) d'échappement, pour y insérer le flux d'air prélevé, l'extrémité des conduits (6) secondaire traversant la virole externe du carter (7) d'échappement pour déverser dans les ouvertures (13) le flux d'air prélevé,
∘ chaque conduit secondaire étant relié à une ouverture (13) différente du carter (7) d'échappement, pour lui transmettre le flux d'air prélevé.

2. Turbomachine selon la revendication 1, comprenant un ou plusieurs diaphragmes (15) disposés dans les conduits (6) secondaires et permettant de réduire la pression du flux d'air prélevé les traversant.

3. Turbomachine selon la revendication 2, dans laquelle les diaphragmes (15) présentent une pluralité de trous (18).

4. Turbomachine selon l'une des revendications 1 à 3, comprenant une ou plusieurs bouches (34) en saillie extérieure du carter (7) d'échappement, l'extrémité des conduits (6) secondaires étant connectée aux bouches (34) pour y insérer le flux d'air prélevé à destination des ouvertures (13).

5. Turbomachine selon la revendication 4, présentant un congé (35) de raccordement entre les bouches (34) et la partie extérieure du carter (7) d'échappement.

6. Turbomachine selon l'une des revendications 1 à 5, dans laquelle les extrémités des conduits (6) secondaires, insérant le flux d'air prélevé, sont disposées du côté intrados des bras (10).

7. Turbomachine selon l'une des revendications 1 à 6, dans laquelle les conduits (6) secondaires présentent une inclinaison progressive en leur extrémité dont la pente est d'un angle θ constamment inférieur ou égal à 45° sur toute l'inclinaison par rapport à un axe (40) longitudinal de la turbomachine.

8. Turbomachine selon l'une des revendications 1 à 7, dans laquelle l'angle (β) entre le flux d'air prélevé introduit dans les ouvertures (13) et le flux (29) primaire circulant dans la turbomachine (1) est inférieur à 45° ou à 35°.

9. Turbomachine selon l'une des revendications 1 à 8, dans laquelle les extrémités (31) des conduits (6) secondaires reliées aux ouvertures du carter (7) d'échappement sont disposées à un angle azimutal compris entre 3H et 9H.

## Patentansprüche

1. Turbomaschine (1), umfassend:
- ein Abgasgehäuse (7), eine Vielzahl von Armen (10) umfassend, wobei der Raum, der die Arme trennt, Öffnungen (13) definiert, in denen ein Primärluftstrom (29) der Turbomaschine (1) zirkuliert, wobei das Abgasgehäuse (7) darüber hinaus eine interne Nabe (20) und einen externen Ring (21) umfasst, zwischen denen sich die Arme (10) erstrecken;
- zumindest einen Kanal (2),
-- konfiguriert, um an einem seiner Enden (3) einen Druckluftstrom zu entnehmen,
-- wobei das andere Ende des Kanals (2) mit zumindest einer Öffnung (13) des Abgasgehäuses (7) verbunden ist, um den im Primärluftstrom (29) entnommenen Luftstrom einzuführen, wobei der entnommene Luftstrom bei seiner Einführung in die Öffnung (13) eine Anzahl an Mach von kleiner oder gleich 0,5 aufweist,
-- wobei der Kanal (2) am anderen Ende in einer Vielzahl von Sekundärkanälen (6) endet, wobei die Sekundärkanäle (6) mit den Öffnung (13) des Abgasgehäuses (7) verbunden sind, um dort den entnommenen Luftstrom einzuführen, wobei das Ende der Sekundärkanäle (6) durch den externen Ring des Abgasgehäuses (7) hindurchführt, um den entnommenen Luftstrom in die Öffnungen (13) abzuleiten,
-- wobei jeder Sekundärkanal mit einer unterschiedlichen Öffnung (13) des Abgasgehäuses (7) verbunden ist, um ihr den entnommenen Luftstrom zu übermitteln.

2. Turbomaschine nach Anspruch 1, eine oder mehrere Membranen (15) umfassend, die in den Sekundärkanälen (6) angeordnet sind und es ermöglichen, den Druck des entnommenen Luftstroms zu senken, der durch sie hindurchführt.

3. Turbomaschine nach Anspruch 2, wobei die Membranen (15) eine Vielzahl von Löchern (18) aufweisen.

4. Turbomaschine nach einem der Ansprüche 1 bis 3, eine oder mehrere Mündungen (34) außen am Abgasgehäuse (7) überstehend umfassend, wobei das Ende der Sekundärkanäle (6) mit den Mündungen (34) verbunden ist, um dort den entnommenen Luftstrom in die Öffnungen (13) einzuführen.

5. Turbomaschine nach Anspruch 4, eine Verbindungskehle (35) zwischen den Mündungen (34) und dem externen Abschnitt des Abgasgehäuses (7) aufweisend.

6. Turbomaschine nach einem der Ansprüche 1 bis 5, wobei die Enden der Sekundärkanäle (6), die den entnommenen Luftstrom einführen, auf der Saugseite der Arme (10) angeordnet sind.

7. Turbomaschine nach einem der Ansprüche 1 bis 6, wobei die Sekundärkanäle (6) eine progressive Neigung an ihrem Ende aufweisen, deren Schräge ein Winkel θ konstant kleiner oder gleich 45° über die gesamte Neigung hinweg im Verhältnis zu einer Längsachse (40) der Turbomaschine ist.

8. Turbomaschine nach einem der Ansprüche 1 bis 7, wobei der Winkel (β) zwischen dem entnommenen Luftstrom der in die Öffnungen (13) eingeführt wird, und dem Primärluftstrom (29), der in der Turbomaschine (1) zirkuliert, kleiner als 45° oder als 35° ist.

9. Turbomaschine nach einem der Ansprüche 1 bis 8, wobei die Enden (31) der Sekundärkanäle (6), die mit den Öffnungen des Abgasgehäuses (7) verbunden sind, in einem Azimuthwinkel zwischen 3U und 9U angeordnet sind.

## Claims

1. A turbine engine (1) comprising:
- an exhaust casing (7), comprising a plurality of arms (10), the space separating the arms defining openings (13) in which a primary airflow (29) of the turbine engine (1) circulates, said exhaust casing (7) further comprising an internal hub (20) and an external shroud (21) between which the arms (10) extend;
- at least one duct (2),
∘ configured to collect at one of its ends (3), a compressed airflow,
∘ the other end of the duct (2) being connected to at least one opening (13) of the exhaust casing (7), so as to insert the collected airflow into in said primary airflow (29), said collected airflow having, during its insertion in the opening (13), a Mach number less than or equal to 0.5,
∘ the duct (2) terminating at said other end in a plurality of secondary ducts (6), the secondary ducts (6) being connected to the openings (13) of the exhaust casing (7), to insert there the collected airflow, the end of the secondary ducts (6) passing through the outer shroud of the exhaust casing (7) to pour into the openings (13) the collected airflow,
∘ each secondary duct being connected to a different opening (13) of the exhaust casing (7), to send it the collected airflow.

2. Turbine engine according to claim 1, comprising one or several diaphragms (15) arranged in the secondary ducts (6) and enabling the pressure of the collected airflow passing through them to be reduced.

3. Turbine engine according to claim 2, wherein the diaphragms (15) have a plurality of holes (18).

4. Turbine engine according to one of claims 1 to 3, comprising one or several mouths (34) projecting externally from the exhaust casing (7), the end of the secondary ducts (6) being connected to the mouths (34) to insert there the the collected airflow towards the openings (13).

5. Turbine engine according to claim 4, having a fillet (35) between the mouths (34) and the outer part of the exhaust casing (7).

6. Turbine engine according to one of claims 1 to 5, wherein the ends of the secondary ducts (6), inserting the collected airflow, are arranged to the pressure side of the arms (10).

7. Turbine engine according to one of claims 1 to 6, wherein the secondary ducts (6) have a progressive incline at their end, whereof the slope is of an angle θ, constantly less than or equal to 45° over the entire incline relative to a longitudinal axis (40) of the turbine engine.

8. Turbine engine according to one of claims 1 to 7, wherein the angle (β) between the collected airflow introduced into the openings (13) and the primary flow (29) circulating in the turbine engine (1) is less than 45° or 35°.

9. Turbine engine according to one of claims 1 to 8, wherein the ends (31) of the secondary duct (6) connected to the openings of the exhaust casing (7) are arranged at an azimuthal angle comprised between 3H and 9H.
